# EUROPÄISCHE PATENTSCHRIFT

(11) **EP 2 380 831 B1**
(45) Veröffentlichungstag und Bekanntmachung des Hinweises auf die Patenterteilung: **07.09.2016**
(21) Anmeldenummer: 10161047.5
(22) Anmeldetag: 26.04.2010
(51) Int. Cl.: B65G 47/14, A22C 15/00

(54) **Vorrichtung zum Transportieren und Vereinzeln von Rauchstöcken**
Device for transporting and separating smoking rods
Dispositif destiné au transport et à l'isolation de barres de fumoir

(43) Veröffentlichungstag der Anmeldung: 26.10.2011
(73) Patentinhaber: Albert Handtmann Maschinenfabrik GmbH & Co. KG, 88400 Biberach (DE)
(72) Erfinder: Liermann, Torsten, 88471, Laupheim (DE); Mayer, Steffen, 71227, Rutesheim (DE); Abele, Benjamin, 73550, Waldstetten (DE)
(74) Vertreter: Grünecker Patent- und Rechtsanwälte PartG mbB

(56) Entgegenhaltungen:
- GB-A- 667 892
- US-A- 2 410 492
- US-A- 2 734 620
- US-A- 3 944 963

## Beschreibung

Die Erfindung betrifft eine Vorrichtung und ein Verfahren zum Transportieren und Vereinzeln von Rauchstöcken bei der Wurstherstellung, gemäß den Oberbegriffen der Ansprüche 1 und 12.

Eine solche Vorrichtung und ein solches Verfahren sind bereits aus der US 2,410,492 A bekannt. Auch die Druckschrift US 2,734,620 A und die GB 667,892 A beschreiben bereits eine Vorrichtung und ein Verfahren zum Transportieren von Rauchstöcken.

Bei der industriellen Wurstherstellung werden gefüllte Wurstketten in der Regel mit einer Aufhängeeinheit mit Hilfe von Aufnahmehaken automatisch in Schlaufen aufgehängt. Die Wurstschleifen werden dabei beispielsweise von Aufnahmehaken gehalten. Anschließend werden die Würste manuell auf einen Rauchstock geschoben. Der Rauchstock wird dann vom Bediener in einen Rauchwagen gehängt. Der Rauchwagen wiederum wird anschließend zur Weiterbehandlung der Würste in eine Räucherkammer geschoben. Die Vielfalt der unterschiedlichen Rauchstöcke erschwert eine Automatisierung der Beladung von Rauchstöcken. Daher sind bisher keine vollständig automatisierten Systeme im Einsatz.

Aus EP 1 985 183 B1 ist bereits eine Rauchstockzuführung bekannt, mit der Rauchstöcke automatisch lagegenau in Wurstschleifen auf einer Aufhängeeinheit positioniert werden können. Jedoch ist es aufgrund der unterschiedlichen Rauchstockgeometrien, wie z.B. Rauchstöcke mit sternförmigem, rundem oder eckigem Querschnitt, schwierig, Rauchstöcke mit komplizierter Rauchstockgeometrie automatisch der Rauchstockzuführung zuzuführen.

Das bedeutet, dass bislang die Rauchstöcke hauptsächlich manuell in die Wurstschleifen eingeschoben werden oder aber manuell auf eine Auflage der Rauchstockzuführung gelegt bzw. geschoben werden.

Hiervon ausgehend liegt der vorliegenden Erfindung die Aufgabe zugrund, eine Vorrichtung und ein Verfahren zum Transportieren und Vereinzeln von Rauchstöcken bereitzustellen, die auch Rauchstöcke mit komplizierter Geometrie, die leicht ineinander verhaken, einfach und zuverlässig vereinzeln und transportieren können.

Erfindungsgemäß wird diese Aufgabe durch die Merkmale der Ansprüche 1 und 12 gelöst.

Die Erfindung weist also eine erste Transporteinrichtung auf, auf die ein Bündel von Rauchstöcken manuell oder automatisch ungeordnet mit deren Längsachse ungefähr quer zur Transportrichtung TR1 aufgelegt werden kann. Die Transporteinrichtung kann z.B. ein Förderband sein oder mehrere nebeneinander angeordnete Förderbänder umfassen. Die Rauchstöcke werden dann in einer ersten Transportrichtung von der Transporteinrichtung transportiert. Die Vorrichtung weist dann weiter einen Ausschleusbereich auf, in dem der Rauchstock mit seiner Längsachse quer zur ersten Transportrichtung ausgerichtet zu liegen kommt. Somit wird jeweils einer der Rauchstöcke in dem Ausschleusbereich quer zur Transportrichtung TR1 ausgerichtet. Es kommt jeweils ein Rauchstock im Ausschleusbereich zu liegen. Der Ausdruck quer zur ersten Transporteinrichtung ist nicht auf 90° zur ersten Transportrichtung beschränkt, sondern schließt einen Bereich von 90°±45° ein. Der Rauchstock kann dann über eine zweite Transporteinrichtung in einer zweiten Transportrichtung und zwar entlang seiner Längsachse aus dem Ausschleusbereich abtransportiert werden. Das Ausschieben der einzelnen Rauchstöcke in Längsrichtung ermöglicht auch das einfache Vereinzeln von Rauchstöcken, die eine komplizierte Geometrie aufweisen und die sich einfach verhaken können, wie beispielsweise Rauchstöcke mit einem sternförmigen Querschnitt. Gleichzeitig können aber auch Rauchstöcke mit einfachen Geometrien, wie beispielsweise runde oder eckige Rauchstöcke, mit der gleichen Vorrichtung vereinzelt werden.

Die Erfindung ermöglicht eine ungeordnete Ablage der Rauchstöcke mit Pufferwirkung.

In besonders vorteilhafter Weise umfasst der Ausschleusbereich einen Anschlag, auf den ein Rauchstock von der ersten Transporteinrichtung gefahren werden kann. Durch den Anschlag kann der Rauchstock, der beispielsweise auf einem Förderband liegt, durch die Vorwärtsbewegung der Transporteinrichtung automatisch mit seiner Längsachse quer zur Transportrichtung auf einfache Art und Weise ausgerichtet werden. Der ausgerichtete vereinzelte Rauchstock kann dann aus dem Ausschleusbereich abtransportiert, z.B. ausgeschoben werden.

Es ist vorteilhaft, wenn der Anschlag in einem Bereich angeordnet ist, der in erster Transportrichtung betrachtet hinter der Auflagefläche der ersten Transporteinrichtung angeordnet ist. Unter Auflagefläche versteht man hier beispielsweise die Fläche eines umlaufenden Förderbandes, die in einer Ebene liegt, also den geraden Abschnitt. Diese Anordnung bringt mehrere Vorteile mit sich. Dadurch, dass es einen Abstand zwischen Anschlag und Auflagefläche der Transporteinrichtung gibt, ist ausreichend Platz für die zweite Transporteinrichtung in einem Bereich hinter der ersten Transporteinrichtung. Darüber hinaus kann die Transporteinrichtung bei Bedarf einfach weggeschwenkt werden. Ferner bringt diese Anordnung den Vorteil mit sich, dass zwischen der Auflagefläche und dem Anschlag ein Spalt entsteht, in den der Rauchstock zumindest teilweise hineinrutschen kann. Das heißt, dass die Position des Rauchstocks in dem Ausschleusbereich dann etwas tiefer liegen kann als auf der Auflagefläche. Somit ist der Rauchstock in einer stabilen Position, selbst wenn die Auflagefläche der Transporteinrichtung nicht horizontal ausgerichtet ist, sondern in Transportrichtung ansteigt.

Gemäß der Erfindung umfasst die zweite Transportrichtung mindestens einen Mitnehmer, der den Rauchstock aus dem Ausschleusbereich schieben kann. Der Mitnehmer kann dann in einfacher Weise an der Stirnseite des Rauchstocks ansetzen und diesen aus dem Ausschleusbereich in seiner Längsrichtung ausschieben. Erfindungsgemäß ist der Mitnehmer im Ausschleusbereich in einem Zwischenraum zwischen der ersten Transporteinrichtung und dem Anschlag bewegbar. Eine solche Anordnung ist besonders einfach und platzsparend. Dieser Mechanismus ermöglicht auch, dass sichergestellt wird, dass jeweils nur ein vereinzelter Rauchstock ausgeschoben wird, selbst wenn noch ein weiterer nachfolgender Rauchstock versehentlich über den Rauchstock geschoben wird. Dabei ist es möglich, dass der Anschlag, wie zuvor beschrieben, hinter der Transportfläche angeordnet ist und somit der Zwischenraum hinter der ebenen Transportfläche vorgesehen ist. Es ist jedoch auch möglich, dass der Anschlag über der Transportfläche vorgesehen ist, so dass der Zwischenraum im Endbereich der Transporteinrichtung über der Transportfläche vorgesehen ist.

Gemäß einer bevorzugten Ausführungsform ist der mindestens eine Mitnehmer auf einem umlaufenden Transportmittel, insbesondere einem umlaufenden Transportriemen angebracht. So kann der Mitnehmer in eine Richtung umlaufen, so dass er nach dem Ausschieben eines Rauchstocks wieder zum Ausschieben des nächsten Rauchstocks vorbereitet werden kann. An dem Transportriemen können auch mehrere Mitnehmer befestigt sein, um in möglichst kurzer Zeit mehrere Rauchstöcke nacheinander ausschieben zu können.

Vorteilhafterweise kann der Anschlag aus seiner Anschlagposition wegbewegt werden, derart, dass ein Rauchstock am Ende der ersten Transporteinrichtung ausschleusbar ist. Das heißt, dass wenn beispielsweise festgestellt wird, dass ein Rauchstock nicht für den weiteren Prozess geeignet ist, da er beispielsweise verbogen ist, einfach von der Transporteinrichtung weitertransportiert und ausgeschleust wird. Es ist vorteilhaft, wenn der Anschlag durch Wegschwenken um eine Schwenkachse nach oben oder unten wegbewegt werden kann. Es ist jedoch auch möglich, dass der Anschlag seitlich oder nach oben über einen entsprechenden Mechanismus wegbewegt wird.

In vorteilhafter Weise sind im Ausschleusbereich mehrere, mindestens aber drei Sensoren angeordnet, die ermitteln, ob ein Rauchstock vollständig in dem Ausschleusbereich liegt. Spricht beispielsweise nur einer von mehreren, z.B. drei Sensoren an, so liegt der nächstkommende Rauchstock noch nicht vollständig im Ausschleusbereich. Erst wenn beispielsweise alle Sensoren den Rauchstock ermitteln, kann von einer Steuereinheit bestimmt werden, dass der Rauchstock vollständig in dem Ausschleusbereich liegt. Dann kann die zweite Transporteinrichtung den Rauchstock abtransportieren. Diese Sensoren können alternativ oder gleichzeitig auch ermitteln, ob der Rauchstock verbogen ist. Ist der Rauchstock beispielsweise verbogen, so spricht dann ausschließlich ein oder mehrere mittlere Sensoren an, während ein oder mehrere Sensoren in einem äußeren Bereich nicht ansprechen. Ein verbogener Rauchstock kann jedoch nicht über die zweite Transporteinrichtung entlang der Rauchstocklängsachse ausgeschoben werden. Deshalb kann ein entsprechender Rauchstock dann ausgeschleust werden.

Es ist auch möglich, dass in einem Bereich, der in der ersten Transportrichtung betrachtet, vor dem Ausschleusbereich liegt, mindestens ein weiterer Sensor angeordnet ist, der einen Leerbereich erkennt. Wird erkannt, dass unmittelbar vor dem Ausschleusbereich kein weiterer Rauchstock antransportiert wird, kann dann beispielsweise die Geschwindigkeit der ersten Transporteinrichtung erhöht werden, um insgesamt die Prozessgeschwindigkeit zu erhöhen.

Es ist vorteilhaft, wenn die Vorrichtung eine Steuereinrichtung aufweist, die einen Antrieb der ersten Transporteinrichtung so ansteuert, dass die Transporteinrichtung mindestens einmal zurück und wieder in Transportrichtung fährt, insbesondere dann, wenn beispielsweise über Sensoren ermittelt wird, dass kein Rauchstock vollständig im Ausschleusbereich liegt. Die Transporteinrichtung kann also intermittierend vor und wieder zurück fahren, bis ein Rauchstock im Ausschleusbereich so zu liegen gekommen ist, dass er ausgeschoben werden kann. Das Vor- und Zurückbewegen begünstigt auch das Vereinzeln übereinanderliegender Rauchstöcke.

Vorteilhafterweise ist in einem Bereich, in erster Transportrichtung betrachtet, vor dem Ausschleusbereich eine Höhenbegrenzung angeordnet. Dies bringt den Vorteil mit sich, dass wenn ein Bündel oder ein ganzer Packen an Rauchstöcken auf die erste Transporteinrichtung aufgelegt wird, nicht zu viele Rauchstöcke übereinander und insbesondere nur einzelne Rauchstöcke durch einen Bereich zwischen der Transportfläche und der Höhenbegrenzung durchtreten können.

Ferner weist die Vorrichtung eine Übergabeeinheit auf, insbesondere eine manuelle Entnahmestation oder eine Einheit, die die vereinzelten Rauchstöcke anderen Prozesseinheiten zuführt. Die zweite Transporteinrichtung führt den Rauchstock dieser Übergabeeinheit zu.

Eine solche Übergabeeinheit kann beispielsweise eine Querverschiebeeinrichtung umfassen, die den Rauchstock quer zu seiner Längsseite verschiebt, derart, dass dieser von einem Rauchstockeinschub aufgenommen werden kann, wobei vorteilhafterweise die Querverschiebeeinrichtung den Rauchstock zunächst in eine Kassette schiebt, die den Rauchstock auf einer Auflage eines Rauchstockeinschubs ablegt. Ein solcher Rauchstockeinschub kann dann den Rauchstock in die Wurstschleifen einführen.

Die Kassette kann mit zwei Halteeinheiten versehen sein, insbesondere zwei in Längsrichtung des Rauchstocks bewegbaren Schiebern, auf denen der Rauchstock aufliegt. Die Halteeinheiten können derart ausgebildet sein, dass bei der Übergabe des Rauchstocks an einen Rauchstockeinschub erst eine Halteeinheit geöffnet wird, beispielsweise durch Wegbewegen eines Schiebers und dann die zweite Halteeinheit geöffnet wird. Somit kann ein Verdrehen des Rauchstocks bei der Übergabe von der Kassette in den Rauchstockeinschub vermieden werden.

Bei dem erfindungsgemäßen Verfahren werden also mehrere Rauchstöcke auf einer ersten Transporteinrichtung in einer ersten Transportrichtung zu einem Ausschleusbereich transportiert, indem jeweils einer der Rauchstöcke mit seiner Längsachse quer zur ersten Transportrichtung zu liegen kommt. Aus dieser Position wird dann der Rauchstock in einer zweiten Transportrichtung entlang der Längsachse des Rauchstocks aus dem Ausschleusbereich abtransportiert und kann so zu einer Übergabeeinrichtung geschoben werden. Wenn noch kein Rauchstock vollständig im Ausschleusbereich liegt, ist es vorteilhaft, wenn die erste Transporteinrichtung mindestens einmal zurück und wieder in Transportrichtung fährt.

Das Ausrichten des Rauchstocks quer zur Transportrichtung erfolgt dadurch, dass der Rauchstock gegen einen Anschlag gefahren wird.

Wenn über Sensoren ermittelt wird, dass der Rauchstock krumm ist, kann der Anschlag bewegt werden und der Rauchstock ausgeschleust werden. Wird ein Leerbereich auf der ersten Transporteinrichtung detektiert, kann die Transportgeschwindigkeit erhöht werden, um insgesamt die Prozessgeschwindigkeit erhöhen zu können.

Die Erfindung wird unter Bezugnahme der folgenden Figuren näher erläutert.
- Fig. 1: zeigt schematisch die wesentlichen Elemente einer Vorrichtung gemäß einem Ausführungsbeispiel der vorliegenden Erfindung.
- Fig. 2: zeigt schematisch in perspektivischer Darstellung einen Teil einer Vorrichtung gemäß einem bevorzugten Ausführungsbeispiel der vorliegenden Erfindung.
- Fig. 3: zeigt schematisch eine Vorderansicht der in Fig. 2 gezeigten Vorrichtung mit einem Seitengehäuse.
- Fig. 4: zeigt schematisch einen Längsschnitt durch eine erste Transporteinrichtung und einen Anschlag und einen Querschnitt durch den ebenen Auflagebereich eines oberen Transportbandes und einen Anschlag gemäß einem Ausführungsbeispiel der vorliegenden Erfindung.
- Fig. 5a: zeigt einen Längsschnitt durch eine Transporteinrichtung und einen Anschlag gemäß einem weiteren Ausführungsbeispiel der vorliegenden Erfindung.
- Fig. 5b: zeigt einen Längsschnitt durch eine Transporteinrichtung und einen Anschlag gemäß einem weiteren Ausführungsbeispiel der vorliegenden Erfindung
- Fig. 6: zeigt eine Übergabeeinheit in perspektivischer Darstellung gemäß der vorliegenden Erfindung.
- Fig. 7: zeigt einen Längsschnitt durch einen Rauchstockeinschub.
- Fig. 8: zeigt in perspektivischer Darstellung einen Rauchstock mit sternförmigen Querschnitt.

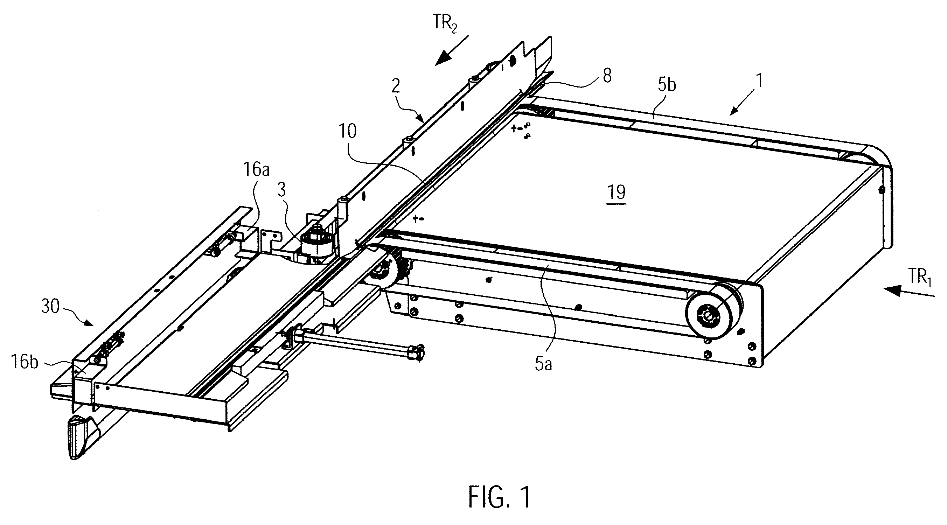

Fig. 1 zeigt die vorliegende Erfindung in perspektivischer Darstellung. Die Vorrichtung kann auf einem nicht dargestellten Gestell angeordnet sein. Die Vorrichtung weist eine erste Transporteinrichtung 1 auf, auf die die Rauchstöcke, z.B. 1 - 50 Stück als Bündel/Packung manuell oder automatisch ungeordnet gelegt werden können. Die erste Transporteinrichtung 1 dient also als Rauchstockaufgabe bzw. Rauchstockmagazin. In diesem Fall werden die Rauchstöcke im Wesentlichen in Transportrichtung TR1 der ersten Transporteinrichtung 1 transportiert. Alternativ ist auch eine Längsförderung mit anschließender Drehung oder eine Querförderung mit vorheriger Drehung denkbar.

In diesem Ausführungsbeispiel ist die erste Transporteinrichtung 1 ein umlaufendes Förderband.

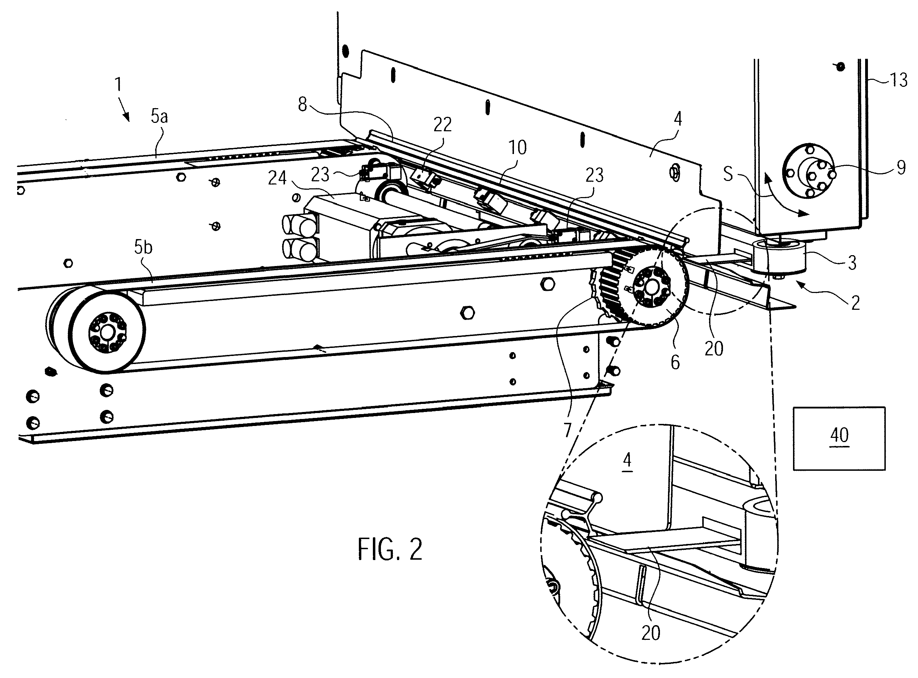

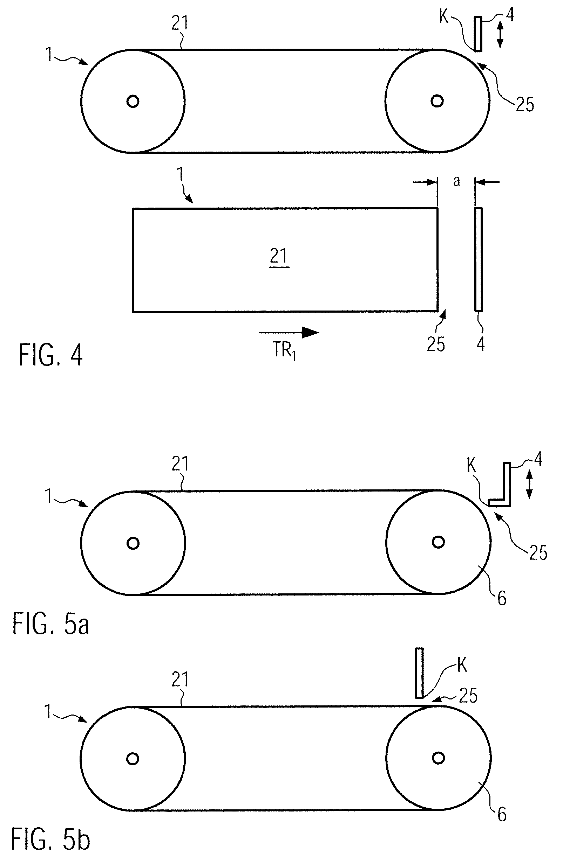

Wie aus Fig. 1 und Fig. 2 hervorgeht, kann das Förderband mehrere, hier zwei schmale Förderbänder 5a,b umfassen, die beabstandet zueinander angeordnet sind. Das Förderband kann wie in Fig. 4 dargestellt auch einteilig ausgebildet sein. Das Förderband weist dann einen hohen Reibwert auf, derart, dass die Rauchstöcke sicher und rutschfest auf dem Band liegen können. Das Förderband bzw. die Förderbänder können über einen Antrieb 24, hier einen Elektromotor, und die von einer Welle angetriebenen Antriebräder 6 und nicht dargestellte Umlenkräder umlaufend angetrieben werden. Wird anstelle des einteiligen Förderbands ein mehrteiliges Förderband verwendet, so wird der Bereich zwischen den Bändern beispielsweise mit einer Auflage 19 abgedeckt, die auf gleicher Höhe wie die Bänder liegt. Wie aus Fig. 2 hervorgeht, können auf der Antriebswelle neben den Antriebsrädern 6 auch noch gezackte Räder 7 gelagert sein, deren Durchmesser etwas größer als der Durchmesser der Antriebsräder 6 ist. Die gezackten Räder 7 (hier z.B. zwei) dienen zur besseren Mitnahme der Rauchstöcke 10, insbesondere wenn sich, wie nachfolgend beschrieben wird, die Transporteinrichtung 1 entgegen der Transportrichtung TR1 bewegt. Der Antrieb 24 wird von einer Steuerung 40, die in Fig. 2 nur schematisch dargestellt ist, angesteuert.

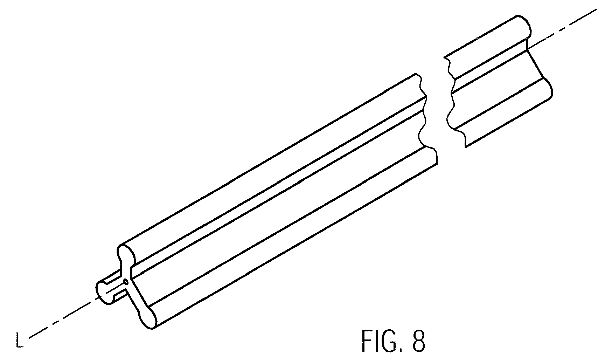

Im Endbereich der ersten Transporteinrichtung 1 befindet sich, wie insbesondere aus den Fig. 1 bis 3 hervorgeht, ein Anschlag 4, hier in Form eines Anschlagblechs, das an einer Halterung 13 höhenverstellbar befestigt ist. Der Anschlag 4 liegt in einem Ausschleusbereich 8. In dem Ausschleusbereich 8 wird der Rauchstock 10 mit seiner Längsachse L (siehe z.B. Fig. 8, die einen Rauchstock mit sternförmigen Querschnitt zeigt) quer zur ersten Transportrichtung TR1 ausgerichtet. Quer zur Transportrichtung TR1 bedeutet hier nicht ausschließlich 90° zur Transportrichtung TR1 sondern 90°± 45°. Der Anschlag 4 ist derart angeordnet, dass der Rauchstock von dem Anschlag 4 gebremst wird und korrekt ausgerichtet wird.

In diesem konkreten Ausführungsbeispiel ist der Anschlag 4, wie insbesondere aus Fig.2 und Fig.4 hervorgeht, in einem Bereich angeordnet, der in erster Transportrichtung TR1 betrachtet, hinter der Auflagefläche 21 der ersten Transporteinrichtung 1 angeordnet ist. Unter Auflagefläche 21 versteht man die Fläche der Transporteinrichtung, die in einer Ebene liegt, d.h. der ebene Auflagebereich, nicht jedoch der um das Rad 6 umlaufende gekrümmte Bereich. Der Anschlag 4 ist somit um einen Abstand a von der ebenen Auflagefläche beabstandet, wobei der kleinste Abstand zwischen der Unterkante K des Anschlags 4 und der Fördereinrichtung 1 (hier dem Band) so zu bemessen ist, dass er kleiner als der Rauchstockdurchmesser ist, so dass der Rauchstock nicht durch den entstehenden Spalt 25 hindurchrutschen kann. Der kleinste Abstand ist definiert als Lot durch die Unterkante K auf die Tangente des gekrümmten Bandes. Über die Verstellung der Höhe des Anschlags, d.h. des Punktes K kann die Breite des Spalts zwischen Punkt K und dem Band eingestellt werden.

Fig. 4 zeigt ein einteiliges Förderband. Die Anordnung des Anschlags 4 ist jedoch auch für mehrere nebeneinander angeordnete Förderbänder entsprechend.

Der Anschlag 4 kann z.B. wie aus der Fig. 5a hervorgeht, auch gebogen, z.B. C- oder L-förmig ausgebildet sein. Zwischen der vorderen Unterkante des Anschlags 4 und der Transporteinrichtung 1 ergibt sich dann der Spalt 25. Auf jeden Fall muss der Spalt 25 zwischen der der Transporteinrichtung 1 zugewandten unteren Kante K und der Transporteinrichtung 1, d. h. dem Band, eine kleinere Spaltbreite aufweisen, als der Durchmesser des Rauchstocks, damit der Rauchstock nicht nach unten durchfällt. Der Rauchstock kann dann von dem Transportband auf den abgewinkelten unteren Bereich 4a transportiert werden, wird von diesem abgebremst und kommt darauf zumindest teilweise zu liegen. Ein Teil kann in den Spalt 25 rutschen.

Dadurch, dass der Anschlag 4 wie in Fig. 4 und 5a gezeigt, hinter der Auflagefläche 21 angeordnet ist und das oder die Förderbänder um die Rolle(n) 6 geführt sind, kommt der Rauchstock 10 am Anschlag 4 in einer Position zu liegen, die etwas niedriger ist als die Auflageposition auf der Auflagefläche 21. Der Rauchstock kann dann, wie insbesondere aus der Fig. 2 hervorgeht, zumindest teilweise in den Spalt 25 zwischen Transporteinrichtung 1 und unteren Ende des Anschlags rutschen. So kann beispielsweise ein sternförmiger Fortsatz eines Rauchstocks, wie insbesondere aus Fig. 2 hervorgeht, durch den Spalt 25 schwerkraftbedingt nach unten ragen. Der Rauchstock befindet sich dann in einer stabilen Position.

Wie aus Fig. 5b hervorgeht, kann der Anschlag 4 auch in einem Bereich über der Auflagefläche 21 angeordnet sein. Auch hier ergibt sich ein Spalt 25 zwischen der Unterkante K und der gegenüberliegenden Bandfläche, hier der Auflagefläche 21.

Die Vorrichtung weist eine Steuerung 40 auf, die den Motor 24 der ersten Transporteinrichtung 1 so ansteuert, dass die Transporteinrichtung mindestens einmal zurück und wieder in Transportrichtung fährt, insbesondere dann, wenn beispielsweise über die nachfolgend noch näher erläuterten Sensoren 22 ermittelt wird, dass kein Rauchstock vollständig im Ausschleusbereich liegt. Die Transporteinrichtung kann also intermittierend vor und wieder zurück fahren, bis ein Rauchstock im Ausschleusbereich so zu liegen gekommen ist, dass er ausgeschoben werden kann. Das Vor- und Zurückbewegen begünstigt auch das Vereinzeln übereinanderliegender Rauchstöcke

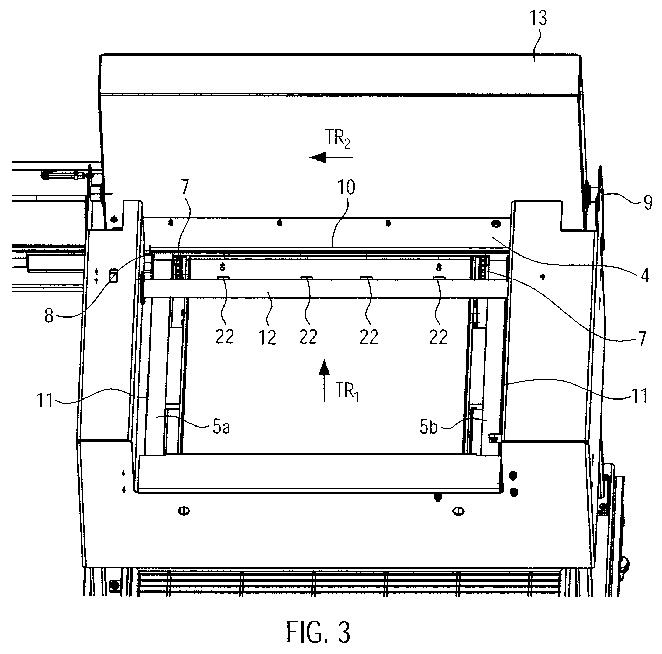

Wie insbesondere aus den Fig. 2 und 3 hervorgeht, sind mehrere, mindestens aber drei Sensoren 22 vorgesehen, die ermitteln, ob ein Rauchstock 10 vollständig im Ausschleusbereich 8 liegt und/oder ermitteln, ob der Rauchstock 10 verbogen ist. In diesem Fall sind vier induktive Sensoren in der Rauchstockauflage 19 integriert. Es können jedoch auch andere Sensoren, wie z.B. optische Sensoren, die über dem Ausschleusbereich angeordnet sind, eingesetzt werden. Mit den Sensoren kann also ermittelt werden, ob ein Rauchstock vollständig im Ausschleusbereich liegt. Spricht beispielsweise nur einer oder nur zwei Sensoren an, so liegt der antransportierte Rauchstock noch nicht vollständig im Ausschleusbereich 8. Erst wenn alle Sensoren, z.B. hier alle vier Sensoren, den Rauchstock ermitteln, kann von einer Steuereinheit 40 bestimmt werden, dass der Rauchstock in dem Ausschleusbereich 8 liegt. Dann kann, wie nachfolgend noch näher erläutert wird, die zweite Transporteinrichtung 2 den Rauchstock abtransportieren.

Die Sensoren 22 können alternativ oder gleichzeitig auch ermitteln, ob der Rauchstock verbogen ist. Ist der Rauchstock beispielsweise verbogen, so spricht ausschließlich ein oder mehrere Sensoren an, die im mittleren Bereich des Ausschleusbereichs angeordnet sind, während ein oder mehrere Sensoren in einem äußeren Bereich nicht ansprechen. Es ist auch möglich, dass nur ein oder mehrere Sensoren im äußeren Bereich einen Rauchstock detektieren, jedoch im mittleren Bereich nicht ansprechen. Dann ermittelt eine Steuereinheit, dass der Rauchstock verbogen ist. Das bedeutet, dass dann, wenn über einen bestimmten Zeitraum, nachdem ein Sensor angesprochen hat, nicht alle weiteren Sensoren ansprechen, bestimmt wird, dass der Rauchstock verbogen ist. Da ein entsprechend verbogener Rauchstock nicht für die weiteren Prozessschritte geeignet ist, wird dieser ausgeschleust. Dies erfolgt, indem eine Steuereinrichtung 40 ein Signal ausgibt, damit der Anschlag 4 aus seiner Anschlagposition, wie sie beispielsweise in den Figuren gezeigt ist, wegbewegt werden kann. Somit kann der entsprechende Rauchstock 10 am Ende der ersten Transporteinrichtung 1 über das Förderband 1 nach unten in einen nicht dargestellten Auffangbehälter ausgeschleust werden. In besonders vorteilhafter Weise wird der Anschlag 4, wie durch den Pfeil S in Fig. 2 dargestellt ist, nach hinten um die Achse 9 weggeschwenkt. Dazu kann ein entsprechender Motor und Schwenkmechanismus vorgesehen sein, der von der Steuerung 40 angesteuert wird, wenn ermittelt wird, dass ein Rauchstock ausgeschleust werden muss.

Ferner kann noch mindestens ein weiterer Sensor 23, hier z.B. in der Auflagefläche 19, vorgesehen sein. Dieser Sensor, beispielsweise ebenfalls ein Induktivsensor oder aber ein über der Transporteinrichtung angeordneter optischer Sensor, detektiert einen Leerbereich. In diesem Ausführungsbeispiel sind z.B. zwei entsprechende Sensoren 23 im äußeren Bereich, d.h. jeweils im äußeren Drittel der ersten Transporteinrichtung, angeordnet. Wird über einen bestimmten Zeitabschnitt in einem Bereich vor dem Ausschleusbereich 8 kein Rauchstock detektiert, so veranlasst die Steuerung 40 die Transporteinrichtung 1 schneller in Transportrichtung TR1 zu laufen, um insgesamt die Prozessgeschwindigkeit zu erhöhen.

Die Vorrichtung kann weiter, wie insbesondere in Fig. 3 zusätzlich dargestellt ist, eine Seitenführung 11 links und rechts neben der ersten Transporteinrichtung aufweisen. Somit ist sichergestellt, dass die Rauchstöcke auch seitlich geführt werden und nicht von der Transporteinrichtung herabrutschen können. Ferner ist es möglich, dann eine Höhenbegrenzung 12 z.B. an diesen Seitenwandungen zu befestigen. Eine Höhenbegrenzung bringt den Vorteil mit sich, dass wenn ein Bündel oder ein ganzer Packen an Rauchstöcken auf die erste Transporteinrichtung aufgelegt wird, nur eine begrenzte Anzahl Rauchstöcke durch einen Bereich zwischen der Transportfläche bzw. der Auflagefläche und der Höhenbegrenzung durchtreten können.

Der in dem Ausschleusbereich 8 ausgerichtete Rauchstock wird dann von einer zweiten Transporteinrichtung 2 entlang der Längsachse L in einer zweiten Transportrichtung TR2 aus dem Ausschleusbereich 8 abtransportiert. Hier ist TR2 senkrecht zu TR1. Die zweite Transporteinrichtung 2 ist hier so ausgebildet, dass sie mindestens einen Mitnehmer 20 umfasst. Der Rauchstock kommt im Ausschleusbereich 8 zwischen Transporteinrichtung 1 und Anschlag 4 zu liegen. Dort ist der Mitnehmer bewegbar angeordnet derart, dass er den Rauchstock an seiner Stirnseite aus dem Ausschleusbereich 8 schieben kann. In vorteilhafter Weise ist der mindestens eine Mitnehmer 20 auf einem umlaufenden Transportmittel 3, insbesondere einem umlaufenden Transportriemen 3, angeordnet. Wenn mehrere Mitnehmer 20 auf dem Transportmittel angeordnet sind, so kann nach dem Ausschieben eines Rauchstocks bereits der nächste Mitnehmer zum Ausschieben vorbereitet werden. Erhält die Steuereinrichtung 40 von den Sensoren 22 das Signal, dass ein ausgerichteter Rauchstock im Ausschleusbereich 8 liegt, startet die Steuereinheit 40 das Ausschieben des Rauchstocks aus dem Ausschleusbereich.

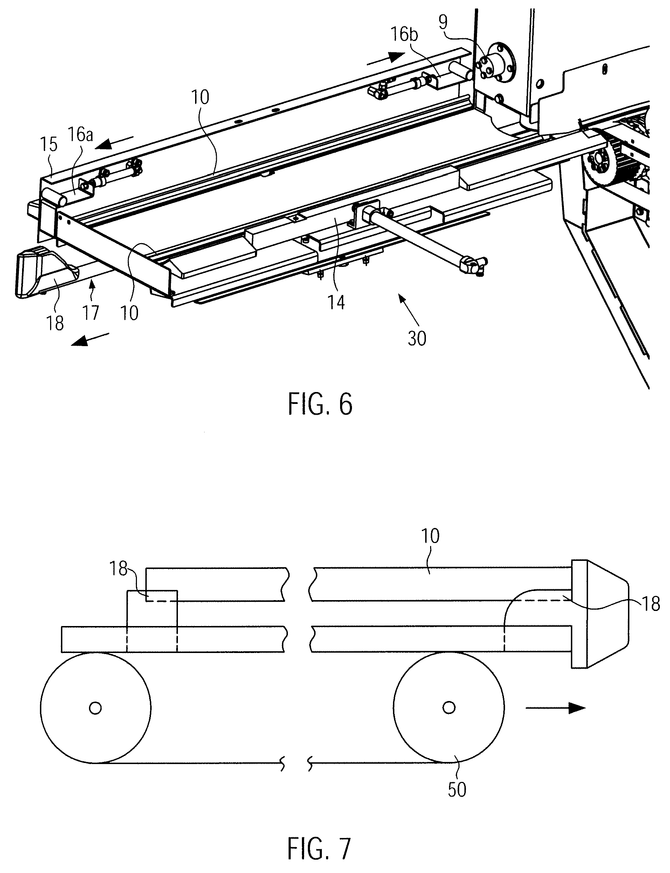

Wie insbesondere aus der Fig. 6 hervorgeht, kann die zweite Transporteinrichtung den Rauchstock an eine Übergabeeinheit 30 ausschieben, wobei die Übergabeeinheit 30 z.B. eine manuelle Entnahmestation ist oder aber, wie in Fig. 6 gezeigt, eine Einheit, die die vereinzelten Rauchstöcke 10 anderen Prozesseinheiten zuführt. Die in Fig. 6 gezeigte Übergabeeinheit umfasst einen Auflagebereich, auf dem der ausgeschobene Rauchstock 10 aufliegt. Diese Übergabeeinheit umfasst eine Querverschiebeeinrichtung 14, die den Rauchstock 10 an seiner Längsseite verschiebt. Die Bewegung der Querverschiebeeinheit erfolgt über einen Antrieb, hier z.B. einen Pneumatikzylinder, der von der Steuereinrichtung 40 angesteuert wird, wenn ein Rauchstock 10 in dem Bereich vor der Querverschiebeeinheit liegt. Die Bewegung der Querverschiebeeinheit 14 ist auf die Bewegung der zweiten Transporteinrichtung 2 abgestimmt. Die Querverschiebeeinheit 14 schiebt dann den Rauchstock 10 z.B. in eine Kassette 15, die zwei Halteeinheiten 16a, b umfasst. Hier sind die Halteeinheiten 16a, b jeweils aus einem bewegbaren Schieber 16a, b gebildet. Die Schieber weisen gebogene Abschnitte auf, auf denen der Rauchstock an seinen gegenüberliegenden Enden gehalten wird. Die Schieber 16a, b können jeweils in Axialrichtung des Rauchstocks 10 bewegt werden. Zum Ablegen des Rauchstocks auf mindestens eine Auflage 18 eines Rauchstockeinschubs 17 wird zunächst ein Schieber geöffnet, d.h. in Axialrichtung vom Rauchstock weg bewegt, so dass dieser nicht mehr auf dem Schieber aufliegt und auf der Auflage 18 zu liegen kommt. Erst dann wird der zweite Schieber in gleicher Weise geöffnet so dass das andere Rauchstockende auf die Auflage 18 fällt.

Die Kassette 15 ist ein konkret ausgeführtes Beispiel, der Rauchstock 10 könnte auch von der Querverschiebeeinrichtung 14 auf einen Absenkmechanismus geschoben werden, der den Rauchstock dann auf dem Rauchstockeinschub ablegt.

Der Rauchstockeinschub 17 ist beispielsweise so wie in Fig. 7 dargestellt, aufgebaut und weist mindestens eine Auflage 18, hier zwei Auflagen auf, auf denen der Rauchstock 10 aufliegen kann. Mittels einer Fördereinrichtung 50 kann dann der Rauchstockeinschub 17 zusammen mit dem Rauchstock 10 in Richtung der Längsachse des Rauchstocks bewegt werden und exakt in einer Wurstschleife platziert werden. Der Rauchstockeinschub kann so aufgebaut sein und so funktionieren, wie in der EP 1 985 183 B1 näher beschrieben ist.

Nachfolgend wird das Verfahren unter Bezugnahme der Fig. 1 bis 8 näher erläutert.

Zunächst wird ein Bündel bzw. Packen von Rauchstöcken 10 auf die erste Transporteinrichtung 1 manuell oder automatisch aufgelegt. In diesem konkreten Ausführungsbeispiel so, dass die Rauchstöcke quer zu ihrer Längsachse gefördert werden. Die Transporteinrichtung 1, hier das Förderband, bewegt die Rauchstöcke in Transportrichtung TR1. Seitlich werden die Rauchstöcke von der Führung 11 (Fig. 3) geführt. Während des Transports laufen die Rauchstöcke 10 unter der Höhenbegrenzung 7 durch, die verhindert, dass zu viele übereinanderliegende Rauchstöcke bis zum Anschlag 4 transportiert werden. Die Höhenbegrenzung 7 kann feststehend sein oder entgegen der Transportrichtung TR1 bewegbar sein. Wird über den mindestens einen Sensor 23 festgestellt, dass ein Leerbereich vor dem Ausschleusbereich 8 vorliegt, so wird über die Steuerung 40 die Geschwindigkeit der ersten Transporteinrichtung erhöht.

Die Transporteinrichtung 1 transportiert die Rauchstöcke 10 dann bis zum Anschlag 4. Mittels der Sensoren 22 wird erkannt, ob ein Rauchstock 10 vollständig im Ausschleusbereich 8 zu liegen gekommen ist. Falls noch kein Rauchstock vollständig im Ausschleusbereich 8 zu liegen gekommen ist, fährt die Transporteinrichtung hier das Förderband zurück, um dann intermittierend vor und wieder zurückzufahren, bis ein Rauchstock im Ausschleusbereich 8 ausgerichtet zu liegen gekommen ist. Dann bewegt sich die Transporteinrichtung 1 wieder in Transportrichtung TR1.

Die Sensoren 22 ermitteln auch ob der Rauchstock für die Nutzung in weiteren Prozessschritten geeignet ist oder ob er zu verbogen ist. Wird über die Sensoren 22, wie zuvor beschrieben ermittelt, dass der Rauchstock verbogen ist, wird der Anschlag 4 weg bewegt, so dass der entsprechende Rauchstock 10 ausgeschleust wird. Dieser fällt dann in einen nicht dargestellten Auffangbehälter. Der Anschlag 4 wird insbesondere durch Wegschwenken des Anschlags 4 um die Schwenkachse 9 automatisch wegbewegt. Nachdem der Rauchstock ausgeschleust wurde, wird der Anschlag wieder in seine Anschlagposition zurück verschwenkt.

Befindet sich schließlich ein Rauchstock 10 in der Ausschleusposition, wird die zweite Transporteinrichtung 2 betätigt und ein Mitnehmer 20 schiebt den Rauchstock 10 entlang seiner Längsachse L aus dem Ausschleusbereich 8 zu einer Übergabeeinrichtung 30.

In diesem Ausführungsbeispiel wird dann der Rauchstock 10 mit der Querverschiebeeinheit 14 in die Kassette 15 eingeschoben, wobei der Rauchstock dann von den Halteeinheiten, hier den Schiebern 16a, 16b gehalten wird. Der Rauchstock wird schließlich auf mindestens eine Auflage 18 auf einen Rauchstockeinschub 17 aufgesetzt, indem die Halteeinheiten, nacheinander geöffnet werden. Der Rauchstockeinschub 17 kann dann zusammen mit dem Rauchstock 10 beispielsweise in einer Wurstschleife platziert werden.

Soweit ein Rauchstock 10 aus dem Ausschleusbereich 8 über die Mitnehmer 20 ausgeschoben worden ist, kann bereits der nächste Rauchstock 10 in den Ausschleusbereich 8 transportiert werden, der dann erneut in Längsrichtung zu der Übergabestation 30 ausgeschoben werden kann. Die Funktion der zweiten Transporteinrichtung und der Querverschiebeeinrichtung 14 sowie soweit vorgesehen der Übergabeeinheit, hier z.B. der Halteeinheiten 16a,b, der Kassette und des Rauchstockeinschubs 17, sind zeitlich aufeinander abgestimmt.

Die erfindungsgemäße Vorrichtung ist modular aus mehreren Modulen aufgebaut. Das erste Modul umfasst die erste Transporteinrichtung sowie die Sensoren 22, 23 und gegebenenfalls die Höhenbegrenzung und die Seitenführungen 11. Ein weiteres Modul umfasst den Anschlag 4 sowie die zweite Transporteinrichtung und die Schwenkeinrichtung. Auch die Übergabeeinheit 30 ist als eigenes Modul ausgebildet und umfasst hier z.B. die Querverschiebeeinheit 14 und die Kassette 15. Der Rauchstockeinschub 17 kann ebenfalls als eigenständigen Modul ausgebildet sein. Somit kann die Vorrichtung einfach realisiert werden und die einzelnen Module können ausgetauscht werden und/oder an verschiedene Bedingungen angepasst werden. Bei besonders komplizierten Rauchstockgeometrien, wie beispielsweise V-förmigen Rauchstöcken, kann z.B. ein Zusatzmodul zur Vorvereinzelung vorgeschaltet werden.

## Patentansprüche

1. Vorrichtung zum Transportieren und Vereinzeln von Rauchstöcken (10) mit einer ersten Transporteinrichtung (1) zum Zuführen von mehreren Rauchstöcken (10) in einer ersten Transportrichtung (TR1),
einem Ausschleusbereich (8), in dem ein Rauchstock (10) mit seiner Längsachse (L) quer zur ersten Transportrichtung (TR1) ausgerichtet zu liegen kommt und
einer zweiten Transporteinrichtung (2), die den Rauchstock (10) in einer zweiten Transportrichtung (TR2) entlang seiner Längsachse (L) aus dem Ausschleusbereich (8) abtransportiert, **dadurch gekennzeichnet, dass** der Ausschleusbereich (8) einen Anschlag (4) umfasst, auf den der Rauchstock (10) von der ersten Transporteinrichtung (1) gefahren werden kann und
die zweite Transporteinrichtung (2) mindestens einen Mitnehmer (20) umfasst, der den Rauchstock (10) aus dem Ausschleusbereich (8) schieben kann, wobei vorteilhafterweise der Mitnehmer (20) im Ausschleusbereich (8) in einem Zwischenraum zwischen der ersten Transporteinrichtung (1) und dem Anschlag (4) bewegbar ist.

2. Vorrichtung nach Anspruch 1, **dadurch gekennzeichnet, dass** der Anschlag (4) in einem Bereich, der in erster Transportrichtung (TR1) betrachtet hinter einer ebenen Auflagefläche (21) der ersten Transporteinrichtung (1) angeordnet ist.

3. Vorrichtung nach mindestens einem der Ansprüche 1 bis 2, **dadurch gekennzeichnet, dass** der mindestens eine Mitnehmer (20) auf einem umlaufenden Transportmittel (3), insbesondere einem umlaufenden Transportriemen (3), angebracht ist.

4. Vorrichtung nach mindestens einem der Ansprüche 1 bis 3, **dadurch gekennzeichnet, dass** der Anschlag (4) aus seiner Anschlagposition wegbewegbar ist, derart, dass der entsprechende Rauchstock (10) am Ende der ersten Transporteinrichtung (1) ausschleusbar ist, wobei der Anschlag (4) insbesondere durch Wegschwenken um eine Schwenkachse (9) wegbewegbar ist.

5. Vorrichtung nach mindestens einem der Ansprüche 1 bis 4, **dadurch gekennzeichnet, dass** mehrere, mindestens aber drei Sensoren (22) angeordnet sind, die ermitteln, ob ein Rauchstock (10) vollständig in dem Ausschleusbereich liegt und/oder ermitteln, ob der Rauchstock (10) verbogen ist.

6. Vorrichtung nach mindestens einem der Ansprüche 1 bis 5, **dadurch gekennzeichnet, dass** in einem Bereich in der ersten Transportrichtung (TR1) betrachtet vor dem Ausschleusbereich (8) mindestens ein weiterer Sensor (23) angeordnet ist, um einen Leerbereich zu erkennen.

7. Vorrichtung nach mindestens einem der Ansprüche 1 bis 6, **dadurch gekennzeichnet, dass** eine Steuereinrichtung (40) vorgesehen ist, die den Antrieb (24) der ersten Transporteinrichtung (1) so ansteuert, dass sie mindestens einmal zurück und wieder in Transportrichtung (TR1) fährt, insbesondere wenn über Sensoren (22) ermittelt wird, dass ein Rauchstock (10) noch nicht vollständig im Ausschleusbereich liegt.

8. Vorrichtung nach mindestens einem der Ansprüche 1 bis 7, **dadurch gekennzeichnet, dass** in einem Bereich, in erster Transportrichtung betrachtet, vor dem Ausschleusbereich (8) eine Höhenbegrenzung (12) angeordnet ist.

9. Vorrichtung nach mindestens einem der Ansprüche 1 bis 8, **dadurch gekennzeichnet, dass** die Vorrichtung weiter eine Übergabeeinheit (30) aufweist, in die die zweite Transporteinrichtung (2) den Rauchstock (10) transportiert, wobei eine Übergabeeinheit (30) insbesondere eine manuelle Entnahmestation oder eine Einheit, die die vereinzelten Rauchstöcke (10) anderen Prozesseinheiten zuführt, umfasst.

10. Vorrichtung nach Anspruch 9, **dadurch gekennzeichnet, dass** die Übergabeeinheit (30) eine Querverschiebeeinrichtung (14) umfasst, die den Rauchstock (10) an seiner Längsseite verschiebt, derart, dass dieser von einem Rauchstockeinschub (17) aufgenommen werden kann, wobei vorteilhafterweise die Querverschiebeeinrichtung (14) den Rauchstock (10) zunächst in eine Kassette (15) schiebt, die den Rauchstock (10) auf einer Auflage (18) des Rauchstockeinschubs (17) ablegt.

11. Vorrichtung nach Anspruch 10, **dadurch gekennzeichnet, dass** die Kassette (15) mit zwei Halteeinheiten (16a, b) versehen ist, insbesondere zwei in Längsrichtung des Rauchstocks bewegbaren Schiebern auf denen der Rauchstock aufliegen kann und die derart ausgebildet sind, dass bei der Übergabe des Rauchstocks (10) an einen Rauchstockeinschub (17) erst eine Halteeinheit (16a) geöffnet und dann die zweite Halteeinheit (16b) geöffnet wird.

12. Verfahren zum Vereinzeln und Transportieren von Rauchstöcken (10) mit einer Vorrichtung nach mindestens einem der Ansprüche 1 bis 11, **gekennzeichnet durch** folgende Schritte:
Transportieren von mehreren Rauchstöcken auf einer ersten Transporteinrichtung (1) in einer ersten Transportrichtung (TR1) zu einem Ausschleusbereich (8), in dem jeweils einer der Rauchstöcke (10) mit seiner Längsachse (L) quer zur ersten Transportrichtung (1) zu liegen kommt und
Transportieren des Rauchstocks (10) mit einer zweiten Transporteinrichtung (2) in einer zweiten Transportrichtung (TR2) entlang der Längsachse (L) des Rauchstocks (10) aus dem Ausschleusbereich (8), **dadurch** gekennzeichnet, dass der Ausschleusbereich (8) einen Anschlag (4) umfasst, wobei der Rauchstock (10) von der ersten Transporteinrichtung (1) auf den Anschlag (4) gefahren wird und die zweite Transporteinrichtung (2) mindestens einen Mitnehmer (20) umfasst, der den Rauchstock (10) aus dem Ausschleusbereich (8) schiebt, wobei vorteilhafterweise der Mitnehmer (20) im Ausschleusbereich (8) in einem Zwischenraum zwischen der ersten Transporteinrichtung (1) und dem Anschlag (4) bewegt wird.

13. Verfahren nach Anspruch 12, **dadurch gekennzeichnet, dass** die zweite Transporteinrichtung den Rauchstock zu einer Übergabeeinrichtung schiebt.

14. Verfahren nach Anspruch 12 oder 13, **dadurch gekennzeichnet, dass** die erste Transporteinrichtung (1) den Rauchstock (10) gegen den Anschlag (4) im Ausschleusbereich (8) fährt und insbesondere mindestens einmal zurück und wieder in Transportrichtung fährt, insbesondere dann, wenn noch kein Rauchstock vollständig im Ausschleusbereich liegt.

15. Verfahren nach mindestens einem der Ansprüche 12 bis 14, **dadurch gekennzeichnet, dass** wenn über Sensoren (22) ermittelt wird, dass der Rauchstock (10) krumm ist, der Anschlag (4) wegbewegt wird, und der Rauchstock (10) ausgeschleust wird.

16. Verfahren nach mindestens einem der Ansprüche 12 bis 15, **dadurch gekennzeichnet, dass** wenn auf der ersten Transporteinrichtung (1) ein Leerbereich detektiert wird, die Transportgeschwindigkeit erhöht wird.

## Claims

1. Apparatus for transporting and separating smoking rods (10), comprising a first transport device (1) for supplying a plurality of smoking rods (10) in a first transport direction (TR1),
an ejection region (8), in which a smoking rod (10) comes to be positioned in a manner oriented with the longitudinal axis (L) thereof transverse to the first transport direction (TR1),
and
a second transport device (2), which transports the smoking rod (10) out of the ejection region (8) in a second transport direction (TR2) along the longitudinal axis (L) thereof, **characterised in that** the ejection region (8) comprises a stop (4), onto which the smoking rod (10) can be brought by the first transport device (1), and
the second transport device (2) comprises at least one carrier (20) which can push the smoking rod (10) out of the ejection region (8), the carrier (20) advantageously being movable in the ejection region (8) in a space between the first transport device (1) and the stop (4).

2. Apparatus according to claim 1, **characterised in that** the stop (4) is arranged in a region which is arranged downstream of a planar support surface (21) of the first transport device (1) as viewed in the first transport direction (TR1).

3. Apparatus according to at least one of claims 1 to 2, **characterised in that** the at least one carrier (20) is attached to a circulating transport means (3), in particular a circulating transport belt (3).

4. Apparatus according to at least one of claims 1 to 3, **characterised in that** the stop (4) can be moved away from the stop position thereof, in such a way that the smoking rod (10) in question can be ejected at the end of the first transport device (1), it being possible to move the stop (4) away, in particular by pivoting it away about a pivot axle (9).

5. Apparatus according to at least one of claims 1 to 4, **characterised in that** a plurality of sensors (22), but at least three, are arranged, and detect whether a smoking rod (10) is fully positioned in the ejection region and/or detect whether the smoking rod (10) is bent.

6. Apparatus according to at least one of claims 1 to 5, **characterised in that** at least one further sensor (23) is arranged in a region which is upstream of the ejection region (8) as viewed in the first transport direction (TR1), so as to detect an empty region.

7. Apparatus according to atleast one of claims 1 to 6, **characterised in that** a control device (40) is provided which controls the drive (24) of the first transport device (1) in such a way that said transport device travels back and forth in the transport direction (TR1) at least once, in particular if it is detected by sensors (22) that a smoking rod (10) is not yet fully positioned in the ejection region.

8. Apparatus according to at least one of claims 1 to 7, **characterised in that** a height barrier (12) is arranged in a region upstream of the ejection region (8) as viewed in the first transport direction.

9. Apparatus according to at least one of claims 1 to 8, **characterised in that** the apparatus further comprises a transfer unit (30) into which the second transport device (2) transports the smoking rod (10), a transfer unit (30) in particular comprising a manual withdrawal station or a unit which supplies the separated smoking rods (10) to other process units.

10. Apparatus according to claim 9, **characterised in that** the transfer unit (30) comprises a transverse displacement device (14), which displaces the smoking rod (10) by the longitudinal face thereof in such a way that said smoking rod can be received by a smoking rod insertion system (17), the transverse displacement device (14) advantageously initially pushing the smoking rod (10) into a cartridge (15), which sets down the smoking rod (10) on a support (18) of the smoking rod insertion device (17).

11. Apparatus according to claim 10, **characterised in that** the cartridge (15) is provided with two holding units (16a, b), in particular two slides which are movable in the longitudinal direction of the smoking rod and on which the smoking rod can be positioned and which are formed in such a way that, when the smoking rod (10) is transferred to a smoking rod insertion system (17), initially one holding unit (16a) is opened and subsequently the second holding unit (16b) is opened.

12. Method for separating and transporting smoking rods (10) using an apparatus according to at least one of claims 1 to 11, **characterised by** the following steps:
transporting a plurality of smoking rods in a first transport direction (TR1) on a first transport device (1) to an ejection region (8), in which each of the smoking rods (10) comes to be positioned with the longitudinal axis (L) thereof transverse to the first transport direction (1),
and
transporting the smoking rod (10) out of the ejection region (8) in a second transport direction (TR2) along the longitudinal axis (L) of the smoking rod (10) by means of a second transport device (2), **characterised in that** the ejection region (8) comprises a stop (4), the smoking rod (10) being brought onto the stop (4) by the first transport device (1), and the second transport device (2) comprises at least one carrier (20) which pushes the smoking rod (10) out of the ejection region (8), the carrier (20) advantageously being moved in the ejection region (8) in a space between the first transport device (1) and the stop (4).

13. Method according to claim 12, **characterised in that** the second transport device pushes the smoking rod to a transfer device.

14. Method according to either claim 12 or claim 13, **characterised in that** the first transport device (1) brings the smoking rod (10) against the stop (4) in the ejection region (8) and in particular travels back and forth in the transport direction at least once, in particular if there is not yet a smoking rod fully positioned in the ejection region.

15. Method according to at least one of claims 12 to 14, **characterised in that**, if it is detected by sensors (22) that the smoking rod (10) is warped, the stop (4) is moved away and the smoking rod (10) is ejected.

16. Method according to at least one of claims 12 to 15, **characterised in that**, if an empty region is detected on the first transport device (1), the transport speed is increased.

## Revendications

1. Agencement pour transporter et séparer individuellement des barres de fumage (10), comprenant un premier dispositif de transport (1) pour l'amenée de plusieurs barres de fumage (10) dans une première direction de transport (TR1),
une zone d'éjection (8) dans laquelle une barre de fumage (10) vient se placer de manière à ce que son axe longitudinal (L) soit orienté transversalement à la première direction de transport (TR1),
un deuxième dispositif de transport (2), qui évacue hors de la zone d'éjection (8), la barre de fumage (10) dans une deuxième direction de transport (TR2) le long de son axe longitudinal (L),
**caractérisé en ce que**
la zone d'éjection (8) comporte une butée (4) contre laquelle peut être déplacée la barre de fumage (10) par le premier dispositif de transport (1), et
le deuxième dispositif de transport (2) comprend au moins un entraîneur (20), qui est en mesure de pousser la barre de fumage (10) hors de la zone d'éjection (8), l'entraîneur (20) étant avantageusement déplaçable dans la zone d'éjection (8), dans un espace intermédiaire entre le premier dispositif de transport (1) et la butée (4).

2. Agencement selon la revendication 1, **caractérisé en ce que** la butée (4) est agencée dans une zone, qui, vu dans la première direction de transport (TR1), se situe après une surface d'appui plane (21) du premier dispositif de transport (1).

3. Agencement selon l'une au moins des revendications 1 à 2, **caractérisé en ce que** ledit au moins un entraîneur (20) est placé sur un moyen de transport (3) en révolution, notamment une courroie de transport (3) en révolution.

4. Agencement selon l'une au moins des revendications 1 à 3, **caractérisé en ce que** la butée (4) peut être escamotée hors de sa position de butée de façon telle que la barre de fumage (10) considérée puisse être éjectée à la fin du premier dispositif de transport (1), la butée (4) pouvant notamment être escamotée par pivotement autour d'un axe de pivotement (9).

5. Agencement selon l'une au moins des revendications 1 à 4, **caractérisé en ce que** sont prévus la disposition de plusieurs, mais d'au moins trois capteurs (22), qui déterminent si une barre de fumage (10) se trouve entièrement dans la zone d'éjection, et/ou déterminent si la barre de fumage (10) est tordue.

6. Agencement selon l'une au moins des revendications 1 à 5, **caractérisé en ce que** dans une zone située, vu dans la première direction de transport (TR1), avant la zone d'éjection (8), est agencé au moins un capteur supplémentaire (23) destiné à détecter une zone vide.

7. Agencement selon l'une au moins des revendications 1 à 6, **caractérisé en ce qu'**il est prévu un dispositif de commande (40), qui commande l'entraînement (24) du premier dispositif de transport (1) de façon telle, qu'il se déplace au moins une fois en arrière et à nouveau dans la direction de transport (TR1), notamment lorsque, par l'intermédiaire de capteurs (22), il a été déterminé qu'une barre de fumage (10) ne se trouve pas encore entièrement dans la zone d'éjection.

8. Agencement selon l'une au moins des revendications 1 à 7, **caractérisé en ce que** dans une zone située, vu dans la première direction de transport, avant la zone d'éjection (8), est agencée une limitation de hauteur (12).

9. Agencement selon l'une au moins des revendications 1 à 8, **caractérisé en ce que** l'agencement comprend, par ailleurs, une unité de transfert (30) dans laquelle est transportée la barre de fumage (10) par le deuxième dispositif de transport (2), une unité de transfert (30) comprenant notamment un poste de prélèvement manuel ou une unité, qui amène les barres de fumage (10) séparées individuellement à d'autres unités de processus.

10. Agencement selon la revendication 9, **caractérisé en ce que** l'unité de transfert (30) comprend un dispositif de poussée transversale (14), qui pousse la barre de fumage (10) sur son côté longitudinal de manière à ce que celle-ci puisse être reçue par un tiroir d'insertion de barre de fumage (17), le dispositif dé poussée transversale (14) poussant la barre de fumage (10) tout d'abord dans une cassette (15), qui dépose la barre de fumage (10) sur un appui de support (18) du tiroir d'insertion de barre de fumage (17).

11. Agencement selon la revendication 10, **caractérisé en ce que** la cassette (15) est pourvue de deux unités de maintien (16a, b), notamment deux poussoirs mobiles dans la direction longitudinale de la barre de fumage, sur lesquelles peut reposer la barre de fumage et qui sont configurées de manière à ce que, lors du transfert de la barre de fumage (10) à un tiroir d'insertion de barre de fumage (17), ce soit tout d'abord une première unité de maintien (16a) qui est ouverte et ensuite la deuxième unité de maintien (16b).

12. Procédé pour transporter et séparer individuellement des barres de fumage (10) à l'aide d'un agencement selon l'une au moins des revendications 1 à 11, **caractérisé par** les étapes suivantes :
le transport de plusieurs barres de fumage sur un premier dispositif de transport (1) dans une première direction de transport (TR1) vers une zone déjection (8), dans laquelle respectivement l'une des barres de fumage (10) vient se placer de manière à ce que son axe longitudinal (L) soit orienté transversalement à la première direction de transport (TR1), et
le transport de la barre de fumage (10) hors de la zone d'éjection (8), à l'aide d'un deuxième dispositif de transport (2) dans une deuxième direction de transport (TR2) le long de l'axe longitudinal (L) de la barre de fumage (10),
**caractérisé en ce que** la zone d'éjection (8) comporte une butée (4), la barre de fumage (10) pouvant être déplacée par le premier dispositif de transport (1) contre la butée (4), et le deuxième dispositif de transport (2) comprend au moins un entraîneur (20), qui pousse la barre de fumage (10) hors de la zone d'éjection (8), l'entraîneur (20) étant avantageusement déplacé dans la zone d'éjection (8), dans un espace intermédiaire entre le premier dispositif de transport (1) et la butée (4).

13. Procédé selon la revendication 12, **caractérisé en ce que** le deuxième dispositif de transport fait coulisser ou pousse la barre de fumage vers un dispositif de transfert.

14. Procédé selon la revendication 12 ou la revendication 13, **caractérisé en ce que** le premier dispositif de transport (1) déplace la barre de fumage (10) contre la butée (1) dans la zone d'éjection (8), et se déplace au moins une fois en arrière et à nouveau dans la direction de transport, notamment lorsqu'aucune barre de fumage ne se trouve encore entièrement dans la zone d'éjection.

15. Procédé selon l'une au moins des revendications 12 à 14, **caractérisé en ce que** si l'on détermine, par l'intermédiaire de capteurs (22), que la barre de fumage (10) est tordue, la butée (4) est escamotée, et la barre de fumage (10) est éjectée.

16. Procédé selon l'une au moins des revendications 12 à 15, **caractérisé en ce que** lorsqu'une zone vide est détectée sur le premier dispositif de transport (1), la vitesse de transport est augmentée.
